# EUROPEAN PATENT APPLICATION

(11) **EP 4 703 981 A1**
(43) Date of publication of application: **04.03.2026**
(21) Application number: 24196733.0
(22) Date of filing: 27.08.2024
(51) Int. Cl.: G06N 10/60, G06N 3/0499

(54) **METHOD FOR PREDICTING A TRAINING TIME OF A QUANTUM CIRCUIT BASED MACHINE LEARNING MODEL**

(71) Applicant: Terra Quantum AG, 9000 St. Gallen (CH)
(72) Inventor: Melnikov, Alexey, 9000 St. Gallen (CH); Sagingalieva, Asel, 9000 St. Gallen (CH); Lopatkin, Vadim, 9000 St. Gallen (CH); Tarpanov, Daniil, 9000 St. Gallen (CH)
(74) Representative: Lucke, Andreas

(57) **Abstract**

A computer-implemented method for estimating a predicted training time for training a quantum-circuit based machine learning model comprising a variational quantum circuit, said method comprising the steps of receiving a quantum circuit architecture of the variational quantum circuit to be assessed for obtaining quantum circuit parameters of the variational quantum circuit including a qubit number, a number of variational qubit gates, and a number of entangling gates; providing the quantum circuit parameters to a predictor machine learning model trained to predict an execution time of the quantum circuit to generate a predicted execution time for the quantum circuit parameters; and determining based on the predicted execution time and a set of training hyperparameters, a training time for training the quantum circuit-based machine learning model.

## Description

### FIELD OF THE DISCLOSURE

The present disclosure is in the field of quantum engineering. In particular, the present disclosure relates to a method of estimating training time of a quantum circuit based machine learning model.

### BACKGROUND

Machine learning models are trained based on training data, such that the machine learning model learns to solve a machine learning task, which may be defined as a relation between input data and output data in the training data. The machine learning model is usually defined by a plurality of weights, which specify an action of parts of the machine learning model on the input data to produce an output based on a machine learning model architecture. For example, in neural networks, the machine learning model architecture may specify layers of artificial neurons and/or their connections to artificial neurons of another layer, and the weights may specify how each of the artificial neurons processes associated features passed to the artificial neurons as input.

Quantum circuit based machine learning models generally comprise a variational quantum circuit comprising a plurality of quantum gates acting on qubits, with the action of some of the quantum gates being parametrized by variational parameters. Qubits are physical systems whose quantum mechanical state can be (coherently) controlled and (substantially) preserved between two basis states during the time of a computation, in the following referred to as |o> and |1>. As an example, a qubit may be implemented by encoding information in the spin state of an electron, e.g. in the electron being in an "up" state or a "down" state, but may also be encoded in a polarization state of a photon, in states of a (superconducting) oscillator, in energy levels of an atom, or the like.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. π/2. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

In variational quantum algorithms, the action of the quantum gates is parametrized in terms of variational parameters, and the variational parameters may be systematically varied with the help of a classical computing resource, in a manner analogous to machine learning, e.g. by implementing a kernel method for classifying an input using a variational quantum circuit. By varying the variational parameters to extremize a cost/loss function, which attributes a cost to the output of the variational quantum circuit with respect to an optimal solution, an output of the variational quantum circuit can be "trained" to provide an optimal solution to an unseen set of inputs. In these applications, entanglement between different qubits may give access to a large internal state space to provide "quantum advantage".

### SUMMARY OF THE DISCLOSURE

However, the design of quantum gate sequences for variational quantum circuits given a machine learning problem provides a fundamental technical challenge, in that classical machine learning techniques cannot generally be used to design an efficient quantum circuit architecture. It can therefore be advantageous to systematically vary architecture parameters of the variational quantum circuit in order to determine an efficient quantum processing resource given a machine learning task.

However, the Inventors found that the dependence of a quantum circuit execution time, in particular when the quantum circuit is simulated on a classical computing resource to find suitable quantum circuit architectures given a machine learning task, is non-trivially related to the parameters defining the quantum circuit architecture. Moreover, an execution time for a single forward pass or training epoch of a variational quantum circuit can be significant and even outside the scope of available hardware. Thus, knowing the potential impact on training time when making changes to the quantum circuit is useful before implementing those changes in a computationally expensive training process, in particular for automatically testing quantum circuit architectures given a limited computing resource, to optimally allocate computing resources during quantum circuit hyperparameter selection. Moreover, in hybrid machine learning models combining classical machine learning models and quantum machine learning models in different layers, the cost of adding the quantum machine learning model can be important for designing an efficient hybrid model. This is especially true in view of constant efforts to improve quantum circuit simulation based on different algorithms/devices and its parallelization as well as associated limitations.

The present disclosure provides a computer-implemented methods of predicting a training time of quantum circuit based machine learning model, a machine learning model, a system, and computer program as set out in the appended independent claim. Examples thereof are detailed in the dependent claims.

A first aspect of the present disclosure relates to a computer-implemented method for estimating a predicted training time for training a quantum-circuit based machine learning model comprising a variational quantum circuit. The method comprises receiving a quantum circuit architecture of the variational quantum circuit to be assessed for obtaining quantum circuit parameters of the variational quantum circuit including a qubit number, a number of variational qubit gates, a number of entangling gates, and providing the quantum circuit parameters to a predictor machine learning model trained to predict an execution time of the quantum circuit to generate a predicted execution time for the quantum circuit parameters. The method further comprises determining based on the predicted execution time and a set of training hyperparameters, a training time for training the quantum circuit-based machine learning model.

The Inventors found that the method can effectively predict complex parameter interactions on the complexity of the variational quantum circuits in relation to an expected training time and may also take into account algorithmic and/or hardware specifics of a processing system used for simulating and/or training the quantum circuit-based machine learning model.

The variational quantum circuit can be defined in terms of a quantum circuit architecture, e.g. including a number of qubits as well as an arrangement of encoding gates, variational quantum gates and multi quantum gates to form the variational quantum circuit, optionally in terms of a specific hardware implementation. The quantum circuit architecture may further include the variational parameters or any parametrization or implementation parameters thereof. The quantum circuit architecture may further define how the set of input features is encoded through the action of the encoding gates in the quantum state of the qubits, e.g. based on a chosen encoding strategy and/or scaling functions, and may further define how a (measured) candidate output of the variational quantum circuit is transformed towards the output of the variational quantum circuit.

In some examples, the quantum circuit architecture comprises an arrangement of quantum gates in the variational quantum circuit parametrized by the quantum parameters, e.g. in terms of a variational quantum circuit type/class.

A variational quantum circuit may generally comprise a plurality of qubits, whose quantum states may be manipulated by the application of quantum gates applied in sequence or in parallel to single qubits and/or multiple qubits.

The qubits can be initialized into an initial state, such as the ground state of each qubit. In some embodiments, after initialization of the qubits into their ground states, superposition states of each qubit in a qubit register of the variational quantum circuit are prepared, e.g. via the application of Hadamard gates. A Hadamard gate may be considered a non-parameterized single qubit gate, and may be realized by a rotation of a qubit state by π/2 about the X-axis, and a subsequent rotation of the qubit state by π about the Y-axis.

Subsequently, a plurality of quantum gates may be applied to the qubits to transform their state towards an output state. In variational quantum circuits, the action of at least some of the quantum gates in the variational quantum circuit is parametrized, such that the measured output is a function of variational parameters parametrizing variable actions of the (variational) quantum gates. The combined action of the (at least partially parametrized) quantum gates may be termed a variational quantum network, as the operating principle may be similar to the operation of a neural network.

Further, in most variational quantum circuits, at least one quantum gate is used as an encoding gate, wherein the action of the encoding gate is based on the set of input features, e.g. provided as an input feature vector. For example, a value of the input feature vector may be encoded into the qubit by rotating the state of one qubit proportional to the value of the input feature vector through a single qubit rotation. Based on the selected encoding strategy, the input features may be encoded at different positions of the variational quantum circuit, e.g. at the beginning of the variational quantum circuit or at regular intervals in the variational quantum circuit, and the encoding of input features may be repeated throughout the variational quantum circuit in some examples.

Two- or multi-qubit gates may create superposition states between the qubits, such as to harness the "quantum advantage" provided by the quantum hardware. For example, when the variational quantum circuit is implemented in a quantum device based on a trapped ion system, the states of different ions in the trapped ion system may be coupled through a joint excitation, e.g. mediated via the Mølmer-Sørensen interaction. As another example, pairs of qubits in the qubit register may be entangled via a (tunable) nearest neighbor interaction or exchange of a quantum particle, in order to implement a two-qubit gate, such as a CNOT gate. The two- or multi-qubit gates creating superposition states between multiple qubits can be considered entangling gates, and may be separated into entangling gates in a variational section of the variational quantum circuit and into entangling gates in an encoding section of the variational quantum circuit for the purposes of defining the quantum circuit architecture, and the number of entangling gates may count the number of entangling gates in the variational section and/or the number of entangling gates in the encoding section.

In some examples, the variational quantum circuit may be defined in terms of layers of quantum gates, which may act on the qubits to link the qubits in the qubit register.

A layer of quantum gates may comprise a cumulative action of a plurality of coherent operations on the state of the qubits in the qubit register. The cumulative action of the coherent operations in one layer should generally act on all qubits of the qubit register which are involved in the computation, or in other words, a layer of quantum gates should directly affect the state of all qubits in the qubit register. Each layer should comprise at least one multi-qubit gate and at least one variational quantum gate (which in principle could be the same gates). In some examples, each layer further includes encoding gates for encoding input features in the states of the qubits.

For example, the variational quantum circuit maybe comprised of a series of trainable layers comprising single- and 2-qubit quantum gates (e.g. Pauli rotation gates (RX,RY,RZ), Hadamard, CNOT), interlaced with encoding gates, e.g. made up of Pauli rotation gates.

The number of variational quantum gates may count the number of variational quantum gates in the variational quantum circuit.

The subsequent application of a plurality of layers of quantum gates to the qubits may then form the variational quantum circuit/network, with the variational quantum circuit being parametrized by variational parameters for each layer.

The layers may contain the same types of quantum gates and may be applied sequentially to the qubit register. For example, each layer may feature the same architecture of quantum gates while different elements of the variational parameters may apply to the variational gates of the layer. In other words, the layers may feature the same quantum gate architecture, but the action of the quantum gates on the qubits in each layer may differ based on the variational parameters.

The number of entangling gates may be the number of entangling gates in variational quantum gate layers and/or the number of entangling gates in encoding layers of the variational quantum circuit.

After the layers of quantum gates have acted on the qubits, the qubits can be measured to obtain a characteristic outcome of the variational quantum circuit with respect to the known initial state. The outcome of the quantum mechanical computation may be linked to the output in the problem data via the computational basis states of the qubits. The computational basis states may be orthogonal basis states of the Hilbert space spanned by the tensor product of the basis states of each qubit. In an implementation of the variational quantum circuit in quantum hardware, the output is generally obtained through a measurement of output states of the qubits involved in the execution of the variational quantum circuit, e.g. a projective measurement of the qubit states onto some basis, e.g. the "Z"-basis.

To determine the output of the quantum circuit, only a subset of the qubits may be measured, which may be quantified as a number of measurements of the variational quantum circuit for the purpose of defining the quantum circuit architecture.

Initial variational parameters for the variational quantum gates can encode an initial (random) guess, and the outcome of the evaluation of the variational quantum circuit with the variational parameters can be measured (repeatedly) to determine a corresponding output. Based on the output, a cost function may be classically evaluated to attribute a cost to the output, or in other words, a measure is calculated of how good the output is.

Usually, the variable parameters are iteratively updated using a feedback-loop implemented in a classical processing system, e.g. based on an (iterative) optimization algorithm, such that the output approaches an optimal solution, i.e. an optimal output given the problem data, making the overall method including the operation of the variational quantum circuit and its control/optimization a hybrid quantum-classical algorithm.

By training the system, the variational parameters may be systematically varied in an iterative manner, such that the machine learning model approximates the output of the problem data.

Training the quantum circuit-based machine learning model may generally comprise determining a loss associated with an output of the machine learning model for a given input feature vector of the problem data based on some quality measure for the output, e.g. the mean squared error with respect to an output recorded in the problem data, and determining an update to the variational parameters of the variational quantum circuit based on the loss.

The variational parameters may be updated with known techniques employed in classical machine learning, such as gradient based optimization algorithms, e.g. stochastic gradient descent or adaptive moment estimation, or gradient free optimization, such as simulated annealing. Preferably, the optimization algorithm is gradient based, and the method may comprise determining a gradient of the variational parameters with respect to the loss attributed to the candidate output by the loss function, e.g. based on determining partial derivatives of the loss function with respect to the variational parameters, which may be determined by executing the variational quantum circuit with shifted variational parameters. The algorithm used for optimizing the variational parameters may be provided as an additional input to the predictor machine learning model for improving an accuracy of the predicted execution time.

The quantum circuit architecture can further include a class of a variational quantum circuit, such as a characteristic sequencing of encoding gates, variational quantum gates, and entangling gates for entangling the states of a plurality of qubits based on a set of quantum circuit architecture parameters. The quantum circuit architecture parameters can include the number of qubits, the number of layers of quantum gates (or depth of the quantum circuit layer), the gate type used for encoding and/or variational quantum gates (such as X, Y, or Z rotations), the measurement basis, the number of input features, and the encoding strategy, such as a data re-uploading scheme.

When evaluating the architecture of the variational quantum circuit for solving a given machine learning task, the variational quantum circuit may be evaluated on classical hardware, such as by simulating the variational quantum circuit on classical processing system using classical processing resources, i.e. employing deterministic gates acting on discrete states of information (e.g. a classical computer system).

In some examples, the predictor machine learning model is trained to predict a simulation time for simulating an execution of the variational quantum circuit on classical hardware.

The simulation time may be determined by simulating and/or approximating a coherent evolution of a qubit state as a result of the application of the variational quantum circuit, and determining an update to the variational parameters to minimize a loss function, e.g. based on a gradient update to the variational parameters of the variational quantum circuit.

In some examples, a feature indicative of a simulation algorithm for simulating the variational quantum circuit is provided as an input to the predictor machine learning model. In some examples, a feature indicative of a hardware configuration is provided as an input to the predictor machine learning model, such as virtual and/or hardware memory, cash size, GPU information, CPU information, or a combination thereof.

In some examples, the predictor machine learning model is trained based on training data obtained using the processing resources used for training the quantum circuit-based machine learning model.

Training the predictor machine learning model on data obtained using the processing resources used for training the quantum circuit-based machine learning model can provide an accurate estimate of the impact of quantum circuit architecture parameters changes on the predictor training time.

In some examples, quantum circuit-based machine learning models with a plurality of different quantum circuit architecture parameters/quantum circuit parameters are trained and the training times for the corresponding sets of training hyperparameters, e.g. number of training epochs, number of threads, number of data points in training data, etc., are recorded. The training times may be divided by quantities linearly affecting the training time, such as the number of training epochs, threads, and data points, such as to average over and decouple the training time from the training hyperparameters.

The resulting averaged/regularized training time may be saved as an execution time in the context of training the variational quantum circuit alongside the quantum circuit architecture parameters/quantum circuit parameters as predictor training data. The predictor machine learning model may subsequently be trained based on the predictor training data to provide an estimate of the execution time given a set of quantum circuit architecture parameters/quantum circuit parameters. The predicted execution time may be multiplied with the training hyperparameters to obtain the training time.

In some examples, determining the training time comprises multiplying the predicted execution time with a number of training data points and/or with a number of training epochs.

In some examples, determining the training time comprises multiplying the predicted execution time with a number of allocated threads.

It was found that the qubit number, the number of variational qubit gates, and the number of entangling gates as input features enable a high level of accuracy for the predictor machine learning model when tasked to predict the training time for training an associated variational quantum circuit.

In some examples, the quantum circuit parameters further comprise a number of non-parametrized single qubit gates, a number of encoding gates, a number of measured qubits, and a number of entangling gates in an encoding section of the variational quantum circuit.

When additional features are added to the input of the predictor machine learning model, the accuracy may be further improved, at the expense of additional training time and/or additional time for constructing a suitable set of predictor training data.

In some examples, the number of quantum circuit parameters is at least four, and/or the number of quantum circuit parameters is at most seven, preferably six or smaller than six.

The Inventors found that the error of the predictor machine learning model given a fixed computing resource may be optimized by selecting a subset of all available features parametrizing the quantum circuit architecture, e.g. by minimizing overfitting of the training data and/or by reducing training dataset collection time. Specifically, processing resources for constructing a training data set and/or for training the object of machine learning model may be reduced given a smaller number of input features, resulting in an improved allocation of computing resources for determining a quantum circuit architecture given a machine learning task. An optimal error rate may be obtained using six quantum circuit parameters, however, in view of an exponential increase in the amount of training data for optimally training the predictor machine learning model, an efficient predictor machine learning model may receive only four or five quantum circuit parameters as input.

In some examples, the predictor machine learning model predicts the logarithm of the training time for each data point and/or for each training epoch, when the quantum circuit-based machine learning model having the quantum circuit architecture is trained to perform a machine learning task.

It was found that the training time for the quantum circuit-based machine learning model can depend polynomially or exponentially on the quantum circuit parameters, such as the number of qubits. Selecting the logarithm of the execution time of the variational quantum circuit, e.g. the logarithm of the training time per training epoch and data point, as the predicted output may therefore improve generalization by the predictor machine learning model.

In some examples, the quantum circuit parameters further comprise a class/type of the variational quantum circuit, e.g. indicating gate types of the components of the variational quantum circuit and/or an arrangement of quantum gates inside of the variational quantum circuit. Additionally or alternatively, the predictor machine learning model may be trained (e.g. fine-tuned) as a specialized machine learning model for predicting the execution time and/or training time of a quantum-circuit based machine learning model of a certain type/class, and the method may select a specialized predictor machine learning model in accordance with the type/class.

In some examples, the method further comprises selecting one of a plurality of specialized predictor machine learning models based on a variational quantum circuit type of the variational quantum circuit, and wherein the specialized predictor machine learning models are trained and/or fine-tuned to predict the execution time for the variational quantum circuit type.

In some examples, the method further comprises receiving a plurality of specialized predictor machine learning models for predicting execution times of different quantum circuit architectures, and wherein the method provides the quantum circuit parameters to one of the specialized predictor machine learning models matching the quantum circuit architecture used to train the one of the specialized predictor machine learning models.

By focusing on specific architectures, the error rate may decrease and/or the number of input features may be reduced, effectively reducing computing resource allocation to predictor machine learning model training prior to or as part of training and/or constructing a quantum circuit based machine learning model. The specialization of the predictor machine learning model may therefore enable more accurate and efficient predictions.

The predictor machine learning model's output may be dependent on the processing resource used to obtain the training data of the execution time as a function of the quantum circuit architecture parameters/quantum circuit parameters. In some examples, a pre-trained predictor machine learning model trained on a large data set using initial training hardware is received, and the pre-trained predictor machine learning model is fine-tuned based on training data obtained through an execution of variational quantum circuits on the processing resource used to train and/or construct the quantum circuit based machine learning model.

A second aspect of the present disclosure relates to a computer-implemented method of training a quantum-circuit based machine learning model, wherein the method comprises selecting a plurality of sets of quantum circuit parameters for the variational quantum circuit, determining the predicted training time according to the method of the first aspect, and determining, based on the predicted training time exceeding a threshold, whether to discard a corresponding set of quantum circuit parameters, or whether to select the corresponding set of quantum circuit parameters for a training algorithm of training a corresponding quantum-circuit based machine learning model.

The use of the predictor machine learning model as part of a method of training a quantum circuit based machine learning model can enable improved resource allocation during an algorithm for selecting optimal quantum circuit parameters given a learning task. The threshold can be selected based on a computing resource availability and may promote quantum circuit parameter expiration in a parameter range, in which training of the quantum circuit based machine learning model is feasible given an available processing resource, e.g. based on a userdefined or pre-determined feasibility criterion, such as a maximum training time per data point and training epoch.

A plurality of quantum-circuit based machine learning models may be trained based on the predicted training time of sets of quantum circuit parameters not exceeding the threshold with a reduced set of training data for a given machine learning task, and the accuracy of the plurality of quantum-circuit based machine learning models may be compared to determine an optimal set of quantum circuit parameters. Subsequently, the quantum-circuit based machine learning model with the best accuracy may be trained with the full set of training data for the given machine learning task.

A third aspect of the present disclosure relates to a computer-implemented method of training a predictor machine learning model to predict an execution time of a quantum circuit. The method comprises statistically generating, based on a plurality of value ranges of quantum circuit parameters, a plurality of quantum circuit architectures, executing each of the quantum circuit architectures on execution hardware, and recording the execution time of each of the quantum circuit architectures on the execution hardware for generating training data, and training the predictor machine learning model to predict the execution time based on the quantum circuit parameters provided as an input.

The method may be executed as part of the methods according to the first and second aspects, e.g. prior to executing the method of the first and second aspects, such as to train the predictor machine learning model on the execution hardware for which the training time of the quantum circuit based machine learning model is assessed and/or on which the quantum circuit based machine learning model is trained.

A user may select a subset of quantum circuit parameters for the training of the predictor machine learning model, such as a subset expressed in terms of computational complexity and/or the number of quantum circuit parameters considered as an input of the predictor machine learning model. For example, a user may specify a computational complexity selection corresponding to three quantum circuit parameters, and the method may train the predictor machine learning model to predict the execution time based on the variational quantum circuit including a qubit number, a number of variational qubit gates, a number of entangling gates, e.g. in a variational section (e.g. as part of variational layers) of the variational quantum circuit, provided as an input.

With an increasing number of input features to be considered as part of training the predictor machine learning model, the method may additionally consider the number of measurements, the number of encoding gates, the number of entangling gates in an encoding section of the variational quantum circuit, and the number of non-parameterized single qubit gates, preferably in that order.

For each additional input feature, the method may comprise populating corresponding value ranges for the quantum circuit parameters with example values, and the training data set may be constructed based on representative example value combinations for the different quantum circuit parameters. As an example, for a total number of four (five) quantum circuit parameters to be considered for the prediction of the execution time and a representative number of ten values for representing each associated value range, a training data set may be constructed from 10⁴⁽⁵⁾ examples sampled from the value ranges, e.g. to represent the potential combinations of values for the four different input features in the training data.

Based on the constructed sets of examples for the input features of the training data, a hardware resource may be tasked to train corresponding quantum circuit based machine learning models, e.g. given some (dummy) machine learning task, for recording corresponding training times to construct a training data set for the predictor machine learning model.

In some examples, executing each of the quantum circuit architectures comprises performing a training process of a quantum circuit-based machine learning model having the respective quantum circuit architecture and recording a training time of the training process as the execution time for the quantum circuit architecture, in particular the logarithm of the training time for each data point and training epoch of the training process.

The execution time may be recorded in terms of the training time for each data point and/or for each training epoch of the training process.

For example, the predictor machine learning model may be trained based on the training data set to predict a training time per data point (and per training epoch), e.g. derived from the recorded training time, given a set of quantum circuit parameters.

In some examples, the execution time is the execution time divided by the number of threads for executing each of the quantum circuit architectures on the execution hardware.

The skilled person will appreciate that features indicative of the hardware resource may be provided as an input to the predictor machine learning model and/or may be used to determine a prediction of the training time given the predicted execution time.

In some examples, the predictor machine learning model is a feed forward neural network, in particular a multilayer perceptron based neural network.

The methods according to any one of the first to third aspects may be implemented using a processing system, which may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

The variational quantum circuit may be evaluated on classical processing (simulation) resources and/or on quantum hardware, e.g. as part of training the machine learning model refined as part of the method. The processing system may comprise a server for interacting with a client device, but any processing may be distributed on a plurality of processing units, e.g. processing units with access to quantum computation hardware.

A fourth aspect of the present disclosure relates to a predictor machine learning model comprising a plurality of learned weights trained to predict an execution time of a quantum circuit based on a plurality of quantum circuit parameters of the variational quantum circuit including a qubit number, a number of variational qubit gates, and a number of entangling gates, wherein the machine learning model has been trained to predict the execution time based on the quantum circuit parameters provided as an input.

The predictor machine learning model can be trained using the method of the third aspect and may benefit from any feature discussed in conjunction with the methods of the first and second aspect.

A fifth aspect of the present disclosure relates to a system for estimating a predicted training time for training a quantum-circuit based machine learning model comprising a variational quantum circuit. The system comprises a processing system configured to receive a quantum circuit architecture of the variational quantum circuit to be assessed for obtaining quantum circuit parameters of the variational quantum circuit including a qubit number, a number of variational qubit gates, a number of entangling gates, provide the quantum circuit parameters to a predictor machine learning model trained to predict an execution time of the quantum circuit to generate a predicted execution time, and determine based on the predicted execution time and a set of training hyperparameters, a training time for training the quantum circuit-based machine learning model.

The system of the fifth aspect may implement the method of the first aspect and may benefit from any features discussed in conjunction therewith. In addition, the system may further be configured to implement the methods of the second and third aspects, and may also implement the predictor machine learning model, e.g. in the processing system.

According to a sixth aspect, the invention relates to a computer program or non-transitory medium comprising machine-readable instructions, which, when executed by a processing system, implement a method according to any one of the first, second, or third aspect, or a combination thereof, and/or a machine learning model or a system according to the fourth or fifth aspect.

### LIST OF FIGURES

In the following, a detailed description of the present disclosure and examples thereof is given with reference to the figures. The figures show schematic illustrations of
Fig. 1: an example of a hybrid quantum classical computation system according to an example of the present disclosure;
Fig. 2: another example of a hybrid quantum classical computation system accordance with an example of the present disclosure;
Fig. 3: a flowchart of a method for training a quantum circuit based machine learning model according an example of the present disclosure;
Fig. 4: a flowchart of a method for predicting a training time for training a quantum circuit based machine learning model according to an example of the present disclosure;
Fig. 5A: a variational quantum circuit according to an example of the present disclosure;
Fig. 5B: a predictor machine learning model according to an example of the present disclosure;
Fig. 6: a flowchart of a method for training a predictor machine learning model according to an example of the present disclosure;
Fig. 7: a correlation matrix of a training dataset for training a predictor machine learning model according to an example of the present disclosure;
Fig. 8A-C: example graphs of the dependence of a training time of a quantum circuit based machine learning model on a number of training data points, a number of training epochs, and a number of qubits in the variational quantum circuit, respectively;
Fig. 9A-C: example bar graphs of the prediction error of a trained predictor machine learning model for different features removed from the predictor machine learning model's input features, for a total number of 6, 5, and 4 input features, respectively;
Fig. 10A-B: example bar graphs of the prediction error of a trained predictor machine learning model for different features removed from the predictor machine learning model's input features, for a total number of 3 and 2 input features, respectively;
Fig. 11A-D: example graphs of the dependence of the prediction error, training time, and the quotient of the prediction error and training time as a function of the number of input features for examples of trained predictor machine learning models, respectively; and
Fig. 12A-D: example histograms for the prediction error of trained predictor machine learning models for validation data, wherein Fig. 12A pertains to a predictor machine learning model trained on training data for multiple variational quantum circuit types, while Fig. 12B-D pertain to a predictor machine learning models trained to predict the training time of specific variational quantum circuit types.

### DESCRIPTION OF EXAMPLES

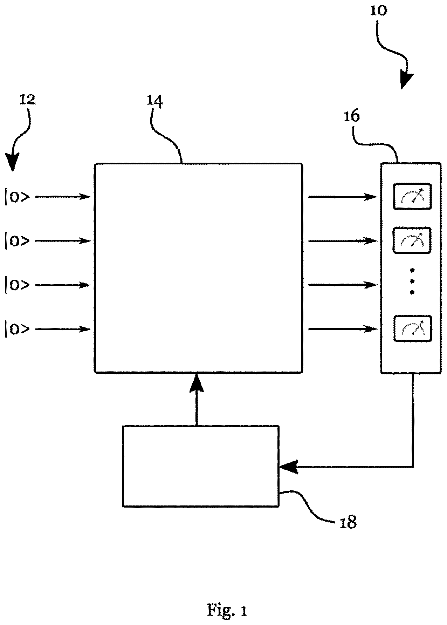

Fig. 1 schematically illustrates an example of a hybrid quantum-classical computation system 10 for implementing and driving a variational quantum circuit, according to a schematic quantum circuit diagram. The schematic quantum circuit diagram depicts an evolution of quantum states from left to right for an exemplary number of computation qubits, wherein control operations on the qubits can be arranged along lines of qubit state evolution to indicate an architecture or time-sequence associated with the quantum circuit. The skilled person will appreciate that additional coherent operations may be included as part of the quantum circuit, and the quantum circuit may be extended to an arbitrary number of qubits. Further, although reference may be made to specific control operations in the following description, the skilled person will appreciate that different control operations may be used to implement the system and methods of the present disclosure, e.g. depending on the physical representation of the qubits.

The illustrated system 10 of Fig. 1 comprises a qubit register 12 comprising a plurality of computation qubits. A plurality of quantum gates 14 may act on the computation qubits of the qubit register 12 to perform a computation/controlled evolution, wherein variable actions of the plurality of quantum gates 14 may be parametrized by variational parameters. The outcome of the computation may be measured by a measurement sensor 16 which projects the states of the computation qubits onto the computational basis states of the hybrid quantum-classical computation system 10. The outcome can be received by a control system 18.

The control system 18 may be configured to repeatedly perform a computation sequence. The computation sequence may comprise initializing the computation qubits of the qubit register 12 before each computation, such as into the ground state of each computation qubit, e.g. to form an initial state of the computation qubits of |00...0>. The initialization of the computation qubits into their respective ground state may in some examples comprise a relaxation process, and the initialization of the computation qubits may not require active control of the computation qubits.

The control system 18 may then apply the plurality of quantum gates 14 to the computation qubits of the qubit register 12 to drive a coherent evolution of the computation qubits. The control system 18 may optionally produce superposition states of all computation qubits, e.g. by applying a Hadamard gate to each of the computation qubits, and may subsequently apply the plurality of quantum gates 14 including variational quantum gates with the variable actions.

In variational quantum circuits, the action of at least some of the quantum gates in the variational quantum circuit is parametrized, such that a measured output of the computation qubits is a function of variational parameters parametrizing variable actions of the variational quantum gates, such as a rotation angle. The combined action of the at least partially parametrized quantum gates may be termed a variational quantum circuit.

Following the coherent evolution, the state of the computation qubits in the qubit register 12 may be measured with the sensor 16. The measurement sensor 16 may be a plurality of single qubit state detectors for measuring the state of each computation qubit following the evolution according to the plurality of quantum gates 14. Repeating the measurement may allow determining the probability of each measurement outcome and the result may be employed for assigning an output label or candidate output to an input vector of features. On the basis of the measured output, the control system 18 can classically calculate an "energy"/ "cost"/ "loss" of the output with a cost/loss function based on a machine learning task. The machine learning task may be specified according to a function, which assigns a loss to the measured output or the output derived therefrom, or may be specified according to pairs of sample input vectors of features and target outputs, e.g. as points of (training) problem data representing a machine learning function, wherein the loss may be based on a difference between the estimated output and the target output.

Conventionally, the control system 18 may repeat the computation sequence with adjusted variable actions based on the outcome, such as to progressively improve the quality of an output label associated with the measured outcome. For example, the control system 18 may repeat the computation sequence with adjusted operation parameters for the variational quantum gates in order to determine a gradient or energy landscape associated with the plurality of quantum gates 14 from the measured outcomes and may update the variational parameters based on the estimated gradient in order to progressively adjust the variational quantum circuit towards an improved solution.

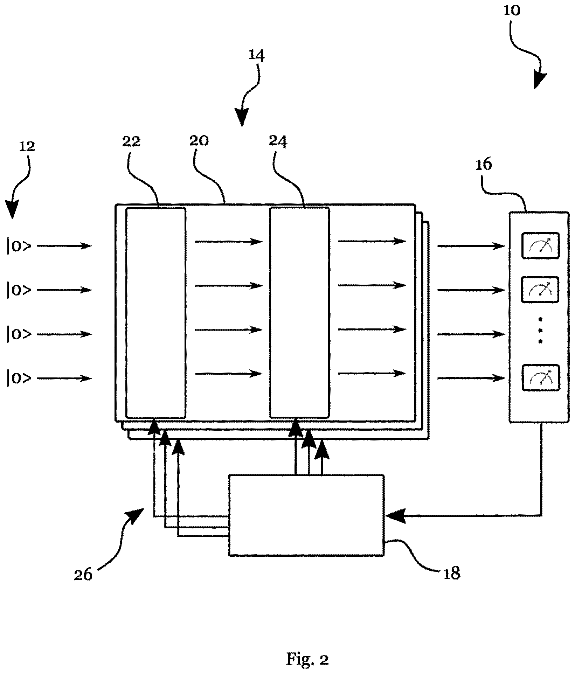

Fig. 2 illustrates another example of a hybrid quantum-classical computation system 10 for implementing and driving a variational quantum circuit. The system 10 comprises a qubit register 12 comprising a plurality of computation qubits. A plurality of quantum gates 14 are arranged in layers of quantum gates 20, which may act on the computation qubits of the qubit register 12 in sequence to perform a computation. Each layer of quantum gates 20 can comprise an encoding layer 22 and a variational layer 24, wherein the variational layer 24 comprises a plurality of variational quantum gates whose actions may be parametrized by different variational parameters in each layer of quantum gates 20. The encoding layer 22 comprises a plurality of encoding gates whose action is parametrized based on values of an input vector of features to be labeled according to a given machine learning task. The encoding layer 22 in different layers of quantum gates 20 may be based on different sub-vectors 26 of the input vector of features, such that different layers of quantum gates 20 may encode different values of the input vector of features into the states of the computation qubits. However, in some examples, different layers of quantum gates 20 may encode the same features or the same features multiplied by different scaling factors, such as to effectively fit a higher Fourier series to the respective features of the input vector as part of a data-reuploading scheme. Each layer of quantum gates 20, e.g. as part of each variational layer 24, may comprise multi-qubit gates for entangling the states of different computation qubits of the qubit register 12, such as a plurality of CNOT gates, as entangling gates for entangling quantum states of at least two qubits of the computation qubits.

The application of the variational layer 24 to the states of the computation qubits 24 after the action of the encoding layer 22 may prepare the quantum states of the computation qubits for the encoding of a different feature of the input vector of features in the next layer of quantum gates 20, or for encoding the same feature multiple times, optionally with a scaling factor applied to the value of the feature.

To encode the values of the input vector of features into the quantum Hilbert space, the "angle embedding" method can utilized, which involves rotating the respective qubit around an axis, such as the Z-axis (it can also be the X or Y-axis) on the Bloch sphere by an angle proportional to a value corresponding the respective feature.

The subsequent application of a plurality of layers of quantum gates to the qubits may form the variational quantum circuit, with the variational quantum circuit being parametrized by variational parameters for each layer. Each layer of quantum gates may comprise an entangling gate for each of the computation qubits, such as to create a superposition state of the computation qubits. In some examples, each layer of quantum gates is configured to entangle the states of each computation qubit with at least one other qubit of the computation qubits. In some examples, each layer comprises a plurality of entangling gates to create a superposition state of all the computation qubits.

The outcome of the computation may be measured by a measurement sensor 16 after all layers of quantum gates 20 have acted on the computation qubits, wherein the measurement sensor 16 may project the states of the computation qubits onto the computational basis states of the hybrid quantum-classical computation system 10. Based on a measured output, which may be determined based on a measurement outcome obtained with the measurement sensor 16 or based on the measurement outcomes obtained with the measurement sensor 16 in multiple repetitions of applying the variational quantum circuit to the computation qubits, the control system 18 may determine an output for labeling the input vector of features according to the given machine learning task. Measuring the computation qubits multiple times may allow determining probabilities of measuring each of the computational basis states of the qubits for the quantum state produced by the application of the plurality of quantum gates.

The variational parameters should be optimized for predicting an optimal output for the input vector of features in view of the machine learning task according to a training algorithm, which may be an iterative process of updating the variational parameters according to an estimated gradient associated with the plurality of quantum gates 14.

However, the selection of an optimized variational quantum circuit architecture for a given set of problem data (and an associated machine learning task) may be non-trivial. Thus, it may be advantageous to optimize a set of quantum circuit parameters defining a variational quantum circuit architecture in a structured manner, which can be done by testing different sets of quantum circuit parameters, e.g. by training corresponding quantum circuit based machine learning model on a subset of the training data and determining the set of quantum circuit parameter, which provides the highest accuracy. The testing of the sets of quantum circuit parameters can be done on quantum hardware, relying on an implementation of qubits on quantum systems, or by simulating the variational quantum circuit on classical hardware, e.g. by computing or approximating an evolution of a state vector when subjected to the quantum gates of the variational quantum circuit.

However, especially when the variational quantum circuit is simulated on classical hardware, the dependence of an execution time of the variational quantum circuit, e.g. for simulating a forward pass of data through the variational quantum circuit or for simulating one step of a training algorithm, on quantum circuit parameter changes may be non-trivial and the execution time may even be outside of the scope of the processing hardware, e.g. given a time limit of one hour, one week or one year.

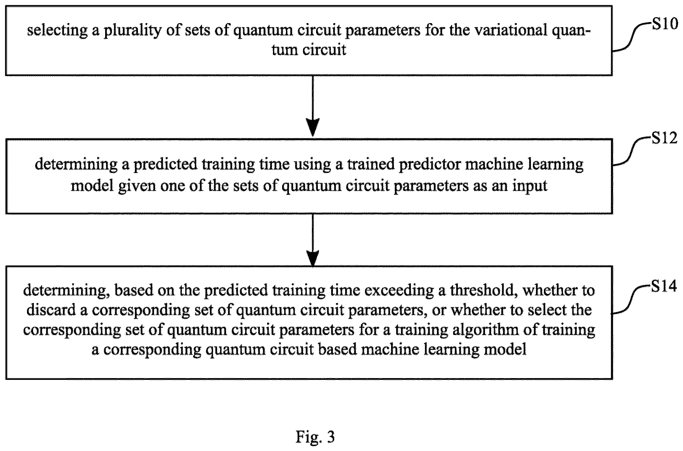

Fig. 3 illustrates an example of a flow chart of a method of training a quantum circuit based machine learning model. The method comprises selecting (S10) a plurality of sets of quantum circuit parameters for the variational quantum circuit, and determining (S12) a predicted training time using a trained predictor machine learning model given one of the sets of quantum circuit parameters as an input. The method further comprises determining (S14), based on the predicted training time exceeding a threshold, whether to discard a corresponding set of quantum circuit parameters, or whether to select the corresponding set of quantum circuit parameters for a training algorithm of training a corresponding quantum-circuit based machine learning model.

The method may generate sets of quantum circuit parameters for the variational quantum circuit based on an initial default parameter choice or a user selection, e.g. in the form of starting parameters and/or value ranges. For example, as part of a guided machine interaction, a user may be presented with a suitable set of quantum circuit parameters given a machine learning task, which may be based on a number of input parameters and a complexity of a desired output based on problem data for the machine learning task. The problem data may be indicative of the machine learning task through the selection of input features and target output features. For example, for a classification task, the input features may be encoded features derived from image data, and the target output features may be decoded classes, such as an object type.

The method may provide a proposal of quantum circuit parameters, such as a number of encoding gates, a number of variational gates, a qubit number, a number of measured qubits for determining the output feature, a number of entangling gates, or any combination thereof. For each of the quantum circuit parameters, an associated parameter value range may be specified based on the starting parameters or a user choice, such as between four and twelve qubits as the qubit number.

Based on the choice of and value ranges for the quantum circuit parameters, the method may construct candidate parameter sets, which can be combinations of values for the quantum circuit parameters (randomly) selected from the corresponding values ranges.

For each candidate parameter set, the method may determine the predicted execution time using a trained machine learning model with a (sub-)set of quantum circuit parameters provided as an input, which can be the computation time for training the corresponding quantum circuit based machine learning model per data point and per training epoch on the processing resource intended for training the quantum-circuit machine learning model to solve the machine learning task.

If the predicted execution time or a training time derived therefrom exceeds a corresponding threshold, which may be set by the user or determined based on a hardware feature of the hardware resource, the set of quantum circuit parameters may be discarded from immediate testing in favor of other sets of quantum circuit parameters to optimally allocate processing resources for efficiently exploring suitable quantum circuit architectures given the machine learning task.

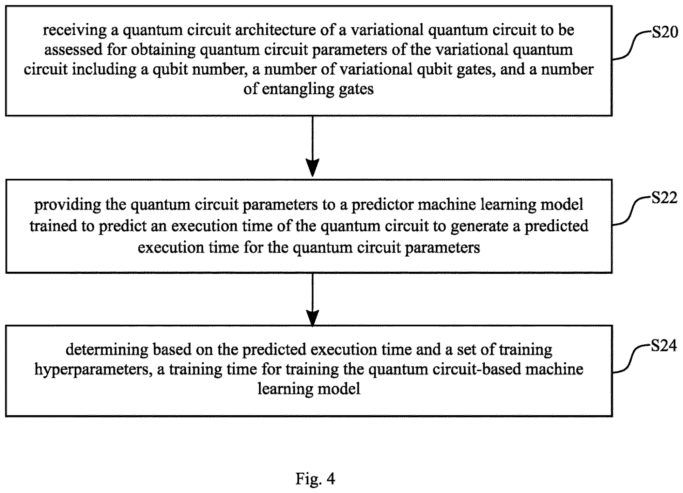

Fig. 4 illustrates an example of a flow chart of a method for estimating a predicted training time for training a quantum circuit based machine learning model comprising a variational quantum circuit. The method comprises receiving (S20) a quantum circuit architecture of the variational quantum circuit to be assessed for obtaining quantum circuit parameters of the variational quantum circuit including a qubit number, a number of variational qubit gates, and a number of entangling gates, and providing (S22) the quantum circuit parameters to a predictor machine learning model trained to predict an execution time of the quantum circuit to generate a predicted execution time for the quantum circuit parameters. The method further comprises determining (S24) based on the predicted execution time and a set of training hyperparameters, a training time for training the quantum circuit-based machine learning model.

The qubit number, the number of variational qubit gates, and the number of entangling gates, in particular the number of entangling gates in the variational layers 24 of a variational quantum circuit, were found to constitute a set of quantum circuit parameters which enable accurate prediction of the training time of the variational quantum circuit with a small number of parameters. Accordingly, the computation resources required for training and/or fine tuning the predictor machine learning model can be reduced, which can improve computation resource allocation of a method of finding suitable quantum circuit parameters and/or hyperparameters for a quantum circuit based machine learning model. In particular, the method may enable accurate prediction with reduced use of the hardware resources for executing and/or training the variational quantum circuit, as the computation resources for collecting a required amount of training data for the predictor machine learning model may be minimized.

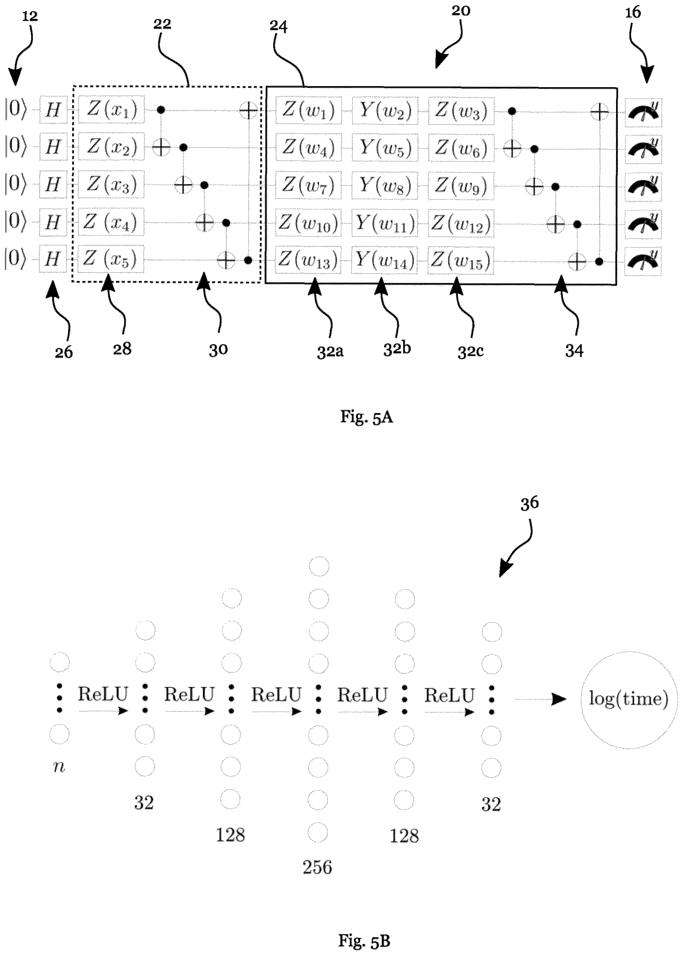

Fig. 5A illustrate schematic examples of a variational quantum circuit and a predictor machine learning model 36 for predicting an execution time of the variational quantum circuit based on quantum circuit parameters, respectively.

The variational quantum circuit illustrated in the example of Fig. 5A comprises a plurality of non-parametrized single-qubit gates acting on five qubits of a qubit register 12, initially prepared in the |0> (ground) state, and implementing Hadamard gates 26 on each of the qubits, e.g. through subsequent X- and/or Y-axis single qubit rotations. An encoding layer 22 acts on the superposition states produced by the action of the non-parametrized single-qubit gates, including encoding gates 28, which are implemented as single qubit rotations, whose action is parametrized by the input features x₁-x₅, and entangling gates 30 in the encoding section, which entangle the states of pairs of qubits with each other, in the example achieved through a layer of CNOT gates cyclically applied to neighboring pairs of qubits.

After the encoding layer 22 has acted on the qubits, a variational layer 24 is applied to the qubits, in the illustrated example comprising a plurality of variational quantum gates 32a-c applied to each qubit, with consecutive single qubit rotations about different axes (Z-, Y-, and again Z-axis rotations in the example), wherein the action of each variational quantum gate 32a-c is parametrized by a corresponding variational parameter *w₁-w₁₅.* In addition to the single qubit rotations on each qubit, the example variational layer 24 comprises entangling gates 34, which entangle the states of pairs of qubits with each other through a layer of CNOT gates.

Each of the encoding layer 22 and the variational layer 24 can be repeated multiple times, e.g. together, to improve input feature encoding and/or to increase the depth of the variational quantum circuit, respectively. If both are repeated, the encoding layer 22 and the variational layer 24 can be arranged alternatingly.

The sequence and arrangement of the quantum gates 14 in the variational quantum circuit may be considered a quantum circuit architecture, and may be described using architecture parameters, such as the number of non-parametrized single qubit gates (five in the example), the number of encoding gates (five per encoding layer 22 in the example), the number of entangling gates in the encoding section (five per encoding layer 22 in the example), the number of variational gates (fifteen per variational layer 24 in the example), and the number of entangling gates in the variational section (five per variational layer 24 in the example), the number of qubits (five in the example), and the number of measurements of qubits for constructing the output (five in the example).

The quantum circuit parameters can be provided to a predictor machine learning model 36 as an input, e.g. as part of n input features provided to an artificial neural network as shown in Fig. 5B. The artificial neural network may process the input features based on learned weights through a plurality of layers of artificial neurons, with the example illustrating 5 layers with 32, 128, 256, 128, and 32 artificial neurons, respectively, and based on a ReLU activation function, although other activation functions and/or neural network architectures maybe used in examples.

In addition to the seven features describing the quantum circuit architecture identified above in the discussion of the example of Fig. 5A, the input features may further comprise algorithm information and/or hardware information characterizing the hardware resource for which the execution time is to be predicted, and/or the algorithm/implementation for executing the variational quantum circuit. Additionally or alternatively, the machine learning model may be trained based on training data obtained by executing and/or simulating variational quantum circuits on the hardware resource, such as to encode hardware and/or algorithm information in the learned weights of the predictor machine learning model 36. For example, the input of the predictor machine learning model 36 may further comprise input for the number of threads, the qubit device/algorithm used for executing/simulating the variational quantum circuit, a differential method for training the quantum circuit-based machine learning model, or any combination thereof.

In the example, the neural network is trained to predict a single feature - training time - using multiple input features. The predicted output of the predictor machine learning model 36 in the example is the logarithm of the training time per training epoch and per data point on the hardware resource. However, in some examples, the predicted output may be the execution time for executing/simulating a single forward pass of the variational quantum circuit and obtaining an output using the hardware resource.

The hardware resource may be a classical computing resource, such as a computer system which can be implemented on a plurality of computing units, or a quantum computing resource, which may implement a variational quantum circuit by coherent interactions with controllable quantum systems acting as qubits, and (projective) quantum state measurements for determining the output of the variational quantum circuit.

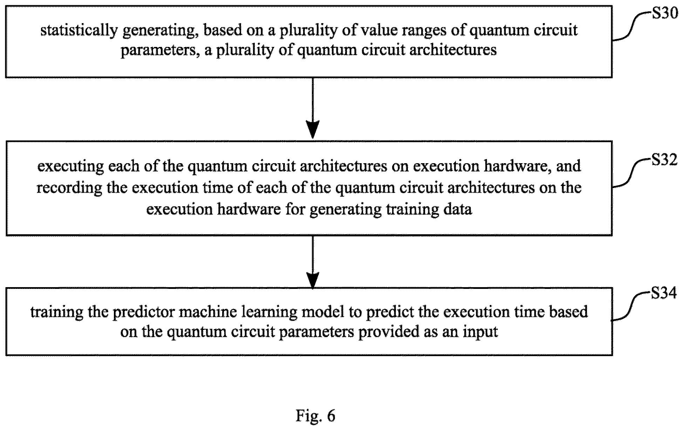

Fig. 6 illustrates a method of training the predictor machine learning model 36. The method comprises statistically generating (S30), based on a plurality of value ranges of quantum circuit parameters, a plurality of quantum circuit architectures, executing (S32) each of the quantum circuit architectures on execution hardware, and recording the execution time of each of the quantum circuit architectures on the execution hardware for generating training data, and training (S34) the predictor machine learning model 36 to predict the execution time based on the quantum circuit parameters provided as an input.

Training data points for the predictor machine learning model 36 may be statistically sampled from the respective value ranges of the quantum circuit parameters, such as to construct a training data set representing possible combinations of the quantum circuit parameters. The quantum circuits parameters may be sampled randomly from the value ranges, e.g. according to some probability function, or a training data set may be constructed comprising substantially all combinations of certain values selected from their respective value ranges of the quantum circuit parameters. For example, if the number of qubits is to be represented with a value range ranging from 1 to 12 qubits, data points may be constructed for each qubit number. The execution hardware may comprise a hardware resource for executing and/or training the variational quantum circuit.

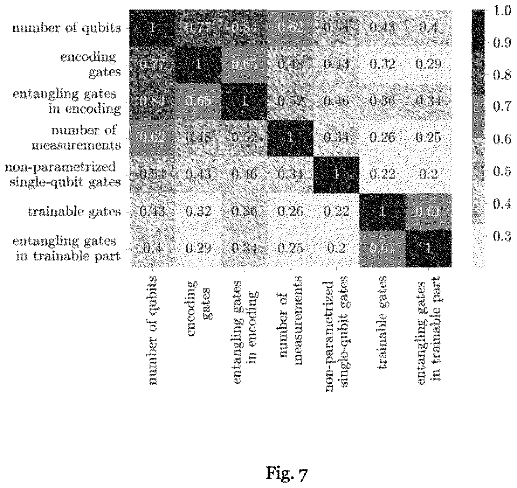

Fig. 7 illustrates an example of a correlation matrix of a data set comprising sets of quantum circuit parameters for randomly sampled variational quantum circuits sampled from a set of per-determined variational quantum circuit classes given value ranges for each of the quantum circuit parameters. Specifically, for a plurality of different variational quantum circuit classes, such as the example shown in Fig. 5A, variational quantum circuits are constructed, e.g. based on quantum circuit architecture parameters, such as the number of qubits, the number of encoding layers 22, and the number of variational layers 24, and the quantum circuit parameters of the resulting variational quantum circuits may be recorded as input training data.

The skilled person will appreciate that that the quantum circuit architecture parameters for constructing the training data set may be different from the quantum circuit parameters the input of the predictor machine learning model 36, e.g. based on the type/class of the variational quantum circuit. The value ranges of quantum circuit parameters may be specified in terms of the quantum circuit parameters themselves, or it may be specified in terms of the quantum circuit architecture parameters, such as the number of encoding layers 22, which may not form part of the quantum circuit parameters.

As illustrated in the correlation matrix of Fig. 7, the resulting data points composed of a combination of quantum circuit parameters may comprise input features which may show some correlation, although some of the defining parameters of a variational quantum circuit, such as the number of qubits and the number of (trainable) variational quantum gates may be comparatively uncorrelated.

Referring again to the method of Fig. 6, given the resulting set of quantum circuit architectures each parameterized by corresponding quantum circuit parameters, the quantum circuit architectures can be executed on execution hardware for recording the execution time of each of the quantum circuit architectures when a corresponding variational quantum circuit is constructed. For example, for each of the quantum circuit architectures, a variational quantum circuit maybe constructed for simulation on a classical hardware resource, and a quantum circuit-based machine learning model including the variational quantum circuit may be trained to solve a dummy machine learning task, which may be a default machine learning task. The training time for training the quantum circuit-based machine learning model may be recorded and normalized based on the number of training data points and based on the number of training epochs of the dummy machine learning task to obtain an execution time as an output training data point.

From the plurality of quantum circuit architectures and the corresponding output training data points, the training data set can be constructed for training the predictor machine learning model 36, which may subsequently be trained on the training data set for predicting the execution time.

The selection of input parameters provided as an input to the predictor machine learning model 36 for defining the quantum circuit architecture may be non-trivial and may affect the accuracy of execution time prediction.

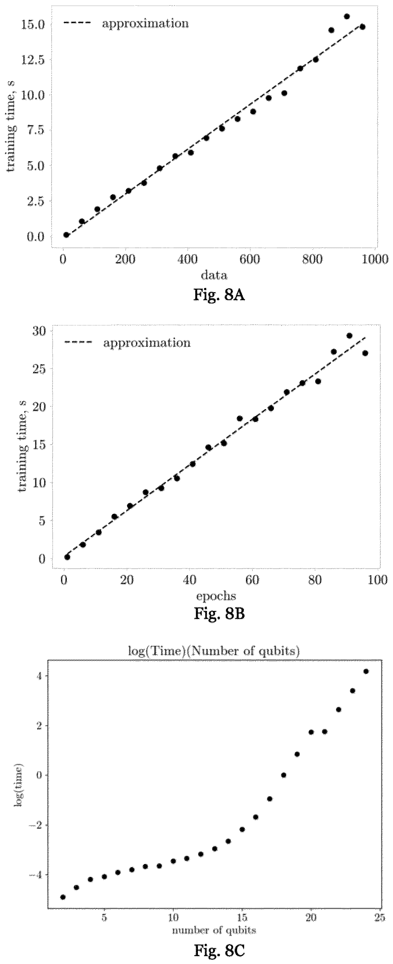

Figs. 8A-C illustrate example results of the training time for different number of data points, number of training points, and number of qubits, respectively, in the training data set for training the predictor machine learning model 36. Figs. 8A, 8B indicate a linear relationship between the training time and the number of data points and training epochs for training the variational quantum circuit. Conversely, the dependence of the training time (the logarithm of the training time is plotted in Fig. 8C) and the number of qubits appears nontrivial.

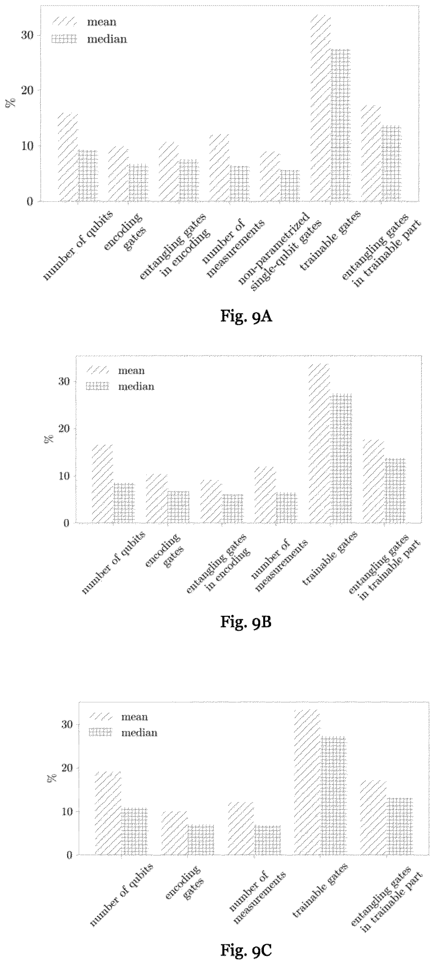

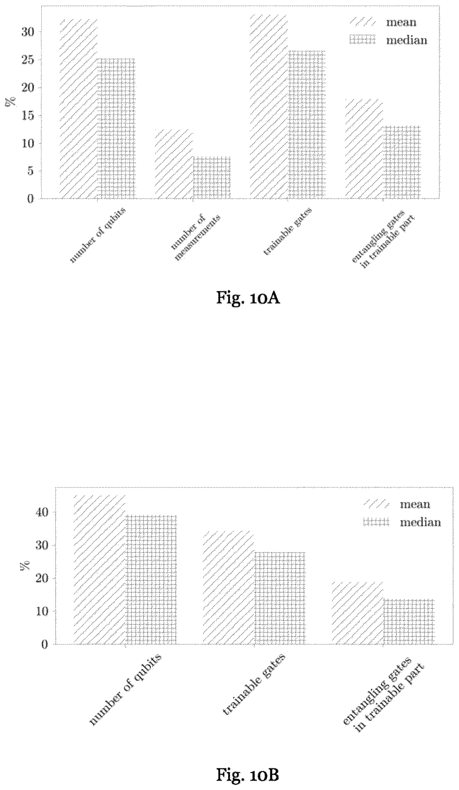

Figs. 9A-9C, and 10A, 10B plot the prediction accuracy for different combinations of input features provided to the predictor machine learning model 36 as an input. Specifically, the validation error in terms of the mean error and the median error are shown for predictor machine learning models 36 trained on the training data discussed in conjunction with figure 5B for different features removed from the input data to the predictor machine learning model 36 (as indicated on the x-axis of the plots).

Fig. 9A shows different variations of six of the input features out of the seven quantum circuit parameters discussed in conjunction with Figure 5A provided to the predictor machine learning model 36 for predicting the logarithm of the training time per training epochs and per data point. The highest error is obtained when removing the number of trainable gates (i.e. the number of variational quantum gates) from the input of the predictor machine learning model 36. The lowest error is achieved for the predictor machine learning models 36 predicting the logarithm of the training time based on the quantum circuit parameters excluding the number of non-parameterized single qubit gates.

Figure 9B illustrates the error for different combinations of five features out of the quantum circuit parameters excluding the number of non-parameterized single qubit gates and the feature given on the X-axis. The lowest error is obtained when removing the number of entangling gates in the encoding section from the set of quantum circuit parameters to define the input features of the predictor machine learning model 36.

Figure 9C illustrates the error for different combinations of four features out of the quantum circuit parameters excluding the number of non-parameterized single qubit gates, the number of entangling gates in the encoding layer, and the feature given on the X-axis. The lowest error is obtained when removing the number of encoding gates from the set of quantum circuit parameters to define the input features of the predictor machine learning model 36.

Figure 10A illustrates the error for different combinations of three features out of the quantum circuit parameters excluding the number of non-parameterized single qubit gates, the number of entangling gates in the encoding layer, the number of encoding gates, and the feature given on the X-axis. The lowest error is obtained when removing the number of measurements from the set of quantum circuit parameters to define the input features of the predictor machine learning model 36.

Figure 10B illustrates the error for different combinations of two features out of the quantum circuit parameters excluding the number of non-parameterized single qubit gates, the number of entangling gates in the encoding layer, the number of encoding gates, the number of measurements, and the feature given on the X-axis.

Accordingly, when minimizing the number of input features of the predictor machine learning model 36, it appears that the highest accuracy can be obtained based on an input constructed from the number of qubits, the number of variational quantum gates, and the number of entangling gates in the (trainable) variational section of the variational quantum circuit. If only two quantum circuit parameters are used as input, the lowest error is obtained for the number of qubits and the number of variational quantum gates provided as respective inputs.

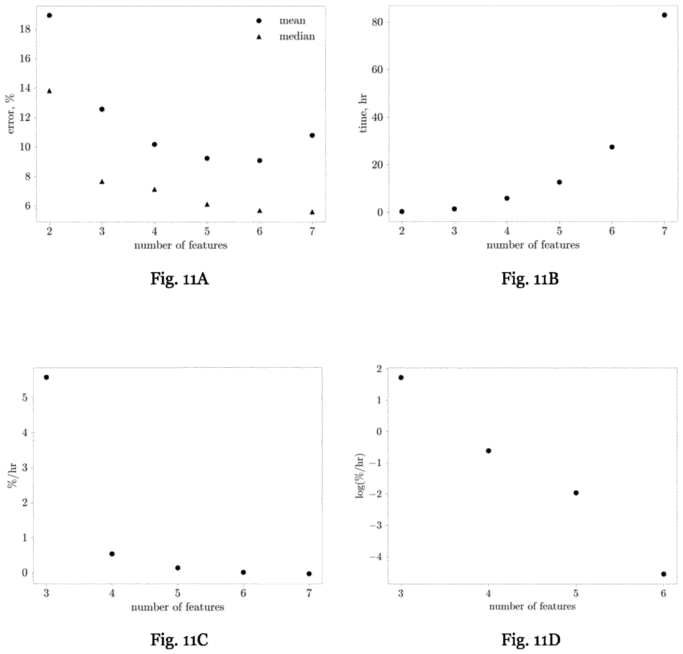

Fig. 11A-D illustrate the error, the time for collection of the training data set for training the predictor machine learning model 36, and the difference of the prediction error divided by the number of hours for contracting the training data set, when compared to the next greater number of input features, in linear and logarithmic scale, respectively.

As can be best seen in Fig. 11 A, the mean error appears to generally get smaller with increasing number of input features, but appears to increase when all of the seven quantum circuit parameters are provided as input features to the predictor machine learning model 36. This increase in the error is attributed to overfitting of the training data set and low impact of the number of non-parameterized single qubit gates on the prediction accuracy of the predictor machine learning model 36.

On the other hand, the time required for collecting the training data set on the hardware resource increases significantly with increasing number of features, e.g. based on the increased number of data points for accurately representing possible combinations of the quantum circuit parameters.

As can be seen from Fig. 11C/D, which combine the results illustrated in Figs. 11A and 11B, the decrease in error per hour of collection of training data decreases with increasing number of features indicating that the highest reduction of the error given a fixed training time can be achieved by using a comparatively small number of features, e.g. 3-5 features selected from the quantum circuit parameters, wherein the optimal number of input features may be 4 or 5, as the reduction of error may be outweighed by the additional training time of the predictor machine learning model.

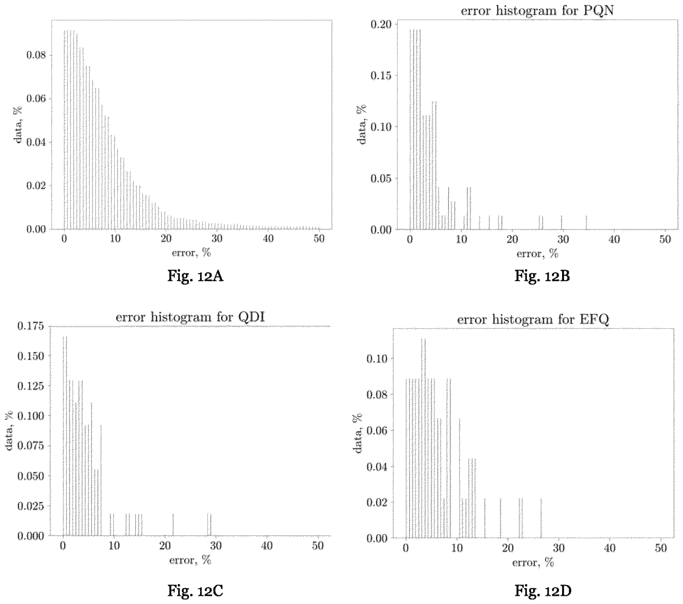

Figs. 12A-D illustrate different error histograms for the error when predicting the logarithm of the training time using a predictor machine learning model 36 based on the quantum circuit parameters for different quantum circuit architectures. Each bar in the histogram represents a bin of errors for predicting the logarithm of the training time within a specific error range of 1%.

Fig. 12A illustrates the error of predicting the logarithm of the training time with a predictor machine learning model 36 trained on a training data set constructed from data on multiple different quantum circuit architectures with different variational quantum circuit classes given five (5) input features, i.e. the number of qubits, the number of variational quantum gates, the number of entangling gates in the variational section, the number of encoding gates and the number of measurements. The histogram details a median error of 6.1% and a mean error of 9.2%. The dataset utilized for this analysis comprises 16,652 data points of training data (161,422 data points for the full dataset comprising all seven (7) input features).

Figs. 12B-D illustrate error histograms for predictor machine learning models trained to and tasked with predicting the logarithm of the training time for specific quantum circuit architectures with a fixed variational quantum circuit class, specified as Parallel Quantum Network (PQN), with multiple parallel quantum circuits, Quantum Depth Infused (QDI) quantum circuit architecture, including multiple encoding layers interlaced with variational quantum layers, and an Exponential Fourier Quantum (EFQ) quantum circuit architecture, including exponentially scaled input features in multiple encoding layers.

For the "PQN" quantum circuit architecture the median error is 3.8%, and the mean error is 6%. The training dataset size is 937. For the "QDI" quantum circuit architecture the median error is 4.6%, and the mean error is 8.9%. The training dataset size is 418. For the "EFQ" quantum circuit architecture the median error is 7.2%, and the mean error is 10.6%. The training dataset size is 368.

As can be seen from the results in Figs. 12A-D, for predicting the training time of a specific class of variational quantum circuits, the prediction error can be reduced by training specialized predictor machine learning models 36 for predicting the training time of a quantum circuit based machine learning model even when small training datasets are used to train the model.

This may facilitate deploying the predictor machine learning model 36 on new hardware resources, e.g. by constructing training datasets for the specific hardware resource and training/fine-tuning the predictor machine learning model thereon, e.g. in order to provide hardware specific predictions of the training time of a quantum circuit based machine learning model.

The examples of the present disclosure disclosed herein only constitute specific examples for illustration purposes. The present invention can be implemented in various ways and with many modifications without altering the underlying basic properties. Therefore, the present invention is only defined by the claims as stated below.

## Claims

1. A computer-implemented method for estimating a predicted training time for training a quantum-circuit based machine learning model comprising a variational quantum circuit, said method comprising the steps of:
receiving a quantum circuit architecture of the variational quantum circuit to be assessed for obtaining quantum circuit parameters of the variational quantum circuit including a qubit number, a number of variational qubit gates (32a-c), and a number of entangling gates (30, 34);
providing the quantum circuit parameters to a predictor machine learning model (36) trained to predict an execution time of the quantum circuit to generate a predicted execution time for the quantum circuit parameters; and
determining based on the predicted execution time and a set of training hyperparameters, a training time for training the quantum circuit-based machine learning model.

2. The method of claim 1, wherein the quantum circuit parameters further comprise a number of non-parametrized single qubit gates (26), a number of encoding gates (28), a number of measured qubits, and a number of entangling gates (30) in an encoding section of the variational quantum circuit.

3. The method of claims 1 or 2, wherein the predictor machine learning model (36) is trained to predict a simulation time for simulating an execution of the variational quantum circuit on classical hardware.

4. The method of any one of the preceding claims, wherein the method further comprises selecting one of a plurality of specialized predictor machine learning models (36) based on a variational quantum circuit type of the variational quantum circuit, and wherein the specialized predictor machine learning models (36) are trained and/or fine-tuned to predict the execution time for the variational quantum circuit type.

5. The method of any one of the preceding claims, wherein the number of quantum circuit parameters is at least four, and/or wherein the number of quantum circuit parameters is at most seven, preferably six or smaller than six.

6. The method of any one of the preceding claims, wherein the predictor machine learning model (36) predicts the logarithm of the training time for each data point and/or for each training epoch, when the quantum circuit-based machine learning model having the quantum circuit architecture is trained to perform a machine learning task.

7. The method of any one of the preceding claims, wherein determining the training time comprises multiplying the predicted execution time with a number of training data points and/or with a number of training epochs; and/or
wherein determining the training time comprises multiplying the predicted execution time with a number of allocated threads.

8. A computer-implemented method of training a quantum-circuit based machine learning model, wherein the method comprises selecting a plurality of sets of quantum circuit parameters for the variational quantum circuit, determining the predicted training time according to the method of any one of the preceding claims, and determining, based on the predicted training time exceeding a threshold, whether to discard a corresponding set of quantum circuit parameters, or whether to select the corresponding set of quantum circuit parameters for a training algorithm of training a corresponding quantum-circuit based machine learning model.

9. A computer-implemented method of training a predictor machine learning model (36) to predict an execution time of a quantum circuit, the method comprising:
statistically generating, based on a plurality of value ranges of quantum circuit parameters, a plurality of quantum circuit architectures;
executing each of the quantum circuit architectures on execution hardware, and recording the execution time of each of the quantum circuit architectures on the execution hardware for generating training data; and
training the predictor machine learning model (36) to predict the execution time based on the quantum circuit parameters provided as an input.

10. The method of claim 9, wherein executing each of the quantum circuit architectures comprises performing a training process of a quantum circuit-based machine learning model having the respective quantum circuit architecture and recording a training time of the training process as the execution time for the quantum circuit architecture, in particular the logarithm of the training time for each data point and epoch of the training process.

11. The method of claim 9 or 10, wherein the execution time is the execution time divided by the number of threads for executing each of the quantum circuit architectures on the execution hardware.

12. The method of any one of claims 9-11, wherein the predictor machine learning model (36) is a feed forward neural network, in particular a multilayer perceptron based neural network.

13. A predictor machine learning model (36) comprising a plurality of learned weights trained to predict an execution time of a quantum circuit based on a plurality of quantum circuit parameters of the variational quantum circuit including a qubit number, a number of variational qubit gates (32a-c), and a number of entangling gates (30, 34), wherein the machine learning model has been trained to predict the execution time based on the quantum circuit parameters provided as an input.

14. A system (10) for estimating a predicted training time for training a quantum-circuit based machine learning model comprising a variational quantum circuit, said system (10) comprising a processing system configured to:
receive a quantum circuit architecture of the variational quantum circuit to be assessed for obtaining quantum circuit parameters of the variational quantum circuit including a qubit number, a number of variational qubit gates (32a-c), a number of entangling gates (30, 34);
provide the quantum circuit parameters to a predictor machine learning model (36) trained to predict an execution time of the quantum circuit to generate a predicted execution time; and
determine based on the predicted execution time and a set of training hyperparameters, a training time for training the quantum circuit-based machine learning model.

15. A computer program comprising machine readable instructions, which when the computer program is executed by a processing unit cause the processing unit to implement a method according to any one of claims 1-12 and/or to implement a machine learning model according to claim 13 or a system (10) according to claim 14.
